(19) Europäisches Patentamt
European Patent Office
Office européen des brevets

(11) **EP 2 456 085 B1**

(12) **FASCICULE DE BREVET EUROPEEN**

(45) Date de publication et mention
de la délivrance du brevet:
**23.11.2016 Bulletin 2016/47**

(21) Numéro de dépôt: **11187137.2**

(22) Date de dépôt: **11.08.2003**

(51) Int Cl.:
*H04B 7/005* (2006.01)    *H04B 17/00* (2015.01)
*H04W 52/42* (2009.01)    *H04B 7/10* (2006.01)

(54) **Terminal et procédé pour l'émission de signaux radio en diversité de polarisation**

Endgerät und Verfahren zum Senden von Funksignalen mit Polarisationsdiversität

Terminal and method for transmitting radio signals with polarization diversity

(84) Etats contractants désignés:
**DE FR GB**

(30) Priorité: **27.08.2002 FR 0210613**

(43) Date de publication de la demande:
**23.05.2012 Bulletin 2012/21**

(62) Numéro(s) de document de la (des) demande(s)
initiale(s) en application de l'article 76 CBE:
**10181863.1 / 2 299 605**
**03292014.2 / 1 394 962**

(73) Titulaire: **BlackBerry Limited**
**Waterloo, ON N2K 0A7 (CA)**

(72) Inventeurs:
• **Lucidarme, Thierry**
**F-78180 Montigny-Le-Bretonneux (FR)**
• **Ben Rached, Nidham**
**F-75017 Paris (FR)**

(74) Mandataire: **Hibbert, Juliet Jane Grace**
**Kilburn & Strode LLP**
**20 Red Lion Street**
**London WC1R 4PJ (GB)**

(56) Documents cités:
WO-A-01/54230    WO-A-02/103928
US-A- 6 154 659    US-B1- 6 438 362

**Description**

La présente invention concerne le domaine des radio-communications. Elle trouve notamment application dans les systèmes de radio-communication à diversité de polarisation.

Traditionnellement, les systèmes de radio-communication avec des mobiles utilisent des techniques de traitement en diversité qui permettent d'améliorer leurs performances. Le traitement en diversité repose sur la combinaison de l'information reçue à partir de plusieurs signaux transmis d'une source vers un destinataire. La diversité peut être introduite sur divers paramètres, comme le temps, l'espace, la fréquence ou la polarisation d'une onde électromagnétique, ce qui donne lieu à de multiples techniques.

Différentes méthodes de diversité d'émission sont par exemple actuellement prévues dans les réseaux cellulaires de troisième génération de type UMTS ("Universal Mobile Telecommunications System") dans le sens descendant (du réseau vers les mobiles). Une première catégorie de méthodes, dites méthodes de diversité d'émission en boucle ouverte mettent en oeuvre les schémas STTD ("Space Time Transmit Diversity") ou TSTD ("Time Switch Transmit Diversity").

Le schéma de diversité STTD repose sur un codage espace-temps. Selon ce schéma, deux signaux $s_0$ et $s_1$ sont simultanément transmis à un instant t et sur une période T d'un temps symbole sur deux antennes 0 et 1, respectivement. A l'instant t + T, les signaux - $s_1^*$ et $s_0^*$ sont simultanément transmis sur une période T sur les antennes 0 et 1, respectivement (le symbole "*" désignant l'opération de conjugaison complexe). Il permet ainsi, sur un système à deux antennes en émission et une antenne en réception, d'obtenir le même ordre de diversité que sur un système à une antenne en émission, deux antennes en réception dont les signaux sont traités par un récepteur à diversité utilisant la méthode de combinaison optimale ("Maximal Ratio Combining", MRC).

Le schéma STTD tel qu'appliqué dans les réseaux de type UMTS est décrit au paragraphe 5.3.1.1.1 de la spécification technique 3G TS 25.211, "Physical channels and mapping of transport channels onto physical channels (FDD)", version 3.9.0 publiée en décembre 2001 par le 3GPP ("3rd Generation Partnership Project").

La diversité d'émission en boucle fermée est aussi mise en oeuvre dans ces réseaux de troisième génération. Une description détaillée en est donnée au paragraphe 7 de la spécification technique 3G TS 25.214, "Physical layer procedures (FDD) - Release 1999", version 3.9.0 , publiée en décembre 2001 par le 3GPP.

Selon ce schéma, un signal est émis à partir de deux antennes, après avoir été pondéré sur chaque branche d'émission par un poids destiné à corriger sa phase et/ou son amplitude afin de maximiser la puissance du signal utile reçue par le récepteur. Une boucle de rétroaction permet la mise à jour à l'émetteur du vecteur de poids optimal. Un tel schéma est potentiellement sensible à la vitesse de déplacement du récepteur. Une vitesse élevée pourra exiger une correction de phase et une mise à jour du vecteur de pondération plus rapide que la vitesse de la boucle de rétroaction actuellement prévue.

Les stations de base de systèmes cellulaires qui exploitent une diversité de polarisation utilisent par exemple un système d'antenne à polarisation croisée ("cross-polar"), c'est-à-dire composé de deux antennes placées au même endroit et agencées à 90° l'une de l'autre (l'une est par exemple sensible à la polarisation verticale, et l'autre sensible à la polarisation horizontale). Le signal transmis est reçu par l'intermédiaire d'un système d'antenne à diversité de polarisation dans deux branches du récepteur. Des techniques de combinaison permettent alors de tirer parti de l'indépendance des comportements sur le trajet de propagation de signaux à polarisations orthogonales. Plus spécifiquement, le gain de diversité de polarisation résulte de la rotation de polarisation lors des réflexions aléatoires de l'onde électromagnétique transmise sur des obstacles. De manière classique, on admet que les signaux reçus en diversité de polarisation doivent être faiblement corrélés pour que la combinaison fournisse un gain qui justifie la mise en oeuvre de cette technique. Lee et Yeh ("Polarization diversity system for mobile radio", IEEE Trans. Com., vol. COM-20, n°5, pp. 912-922, 1972) ont considéré qu'une diversité efficace peut être atteinte avec un coefficient de corrélation en dessous de 0.7.

La présente invention se rapporte notamment à un schéma de diversité duale de polarisation en émission. Dans un tel schéma, l'émission radio est répartie sur deux unités agencées pour émettre chacune un signal dans une polarisation prédéterminée. Il peut par exemple être mis en oeuvre dans une station de base pourvue d'un système d'antenne à polarisation croisée, et de deux unités d'émission radio, l'une étant prévue pour émettre en polarisation linéaire verticale, et l'autre en polarisation linéaire horizontale.

De telles stations de base sont décrites par exemple dans US-A-6 411 824, WO01/54230 et US 6154659.

La demande WO01/54230 décrit en particulier un système permettant de diminuer les effets des évanouissements rapides ("fast fading") observés sur un canal de communication avec un mobile. Selon la méthode décrite, une unité de transmission (d'une station de base ou d'un mobile) balaye des états prédéterminés de polarisation d'émission. La sélection d'un état optimal s'effectue selon un procédé en boucle ouverte ou en boucle fermée. Un tel procédé nécessite un rythme de mise à jour de l'optimum de polarisation au sens de la minimisation des effets du fading correspondant à la rapidité d'évolution de ce phénomène. Dans l'exemple décrit, l'adaptation est ainsi effectuée à un rythme de l'ordre d'une trame d'une durée de 10 ms. Une telle rapidité est peu compatible avec un procédé en boucle fermée, le rythme de la boucle de rétroaction imposant une charge excessive sur l'interface air compte tenu des avantages procurés par le procédé.

Le brevet US 6154659 décrit en particulier un radiotéléphone qui démodule les informations reçues de la station de base. Un rapport (Es / No) est estimé pour une durée donnée. Cette estimation est comparée à un rapport cible Es / No. Celui-ci est actualisé périodiquement pour maintenir une qualité de service. Si le rapport Es / No estimé est supérieur au rapport cible, le radiotéléphone envoie à la station de base, sur un canal de signalisation pour contrôle de puissance inverse, une commande pour réduire la puissance . Si le rapport Es / No estimé est inférieur au rapport cible, le radiotéléphone envoie une commande pour augmenter la puissance à la station de base sur le même canal. Un système d'émetteur-récepteur à porteuses multiples pour un système d'accès multiple a répartition par code comprend un circuit pour transposer des données d'utilisateur sur une pluralité de canaux de fréquence. Le système émetteur-récepteur comprend une pluralité d'antennes pour transmettre chaque canal de données d'utilisateur. Le procédé d'utilisation du système à porteuses multiples comprend le traitement des données d'utilisateur, puis la transmission des données aux différents canaux de fréquence, et, si nécessaire, la transmission des données via les différentes antennes séparées dans l'espace et / ou ayant une polarisation orthogonale.

Un but de la présente invention est de proposer un autre mode de diversité de polarisation, qui procure un gain de réception appréciable sans chercher à suivre les évanouissements rapides du canal, ce qui imposerait une charge de signalisation difficilement acceptable.

L'invention propose ainsi un procédé selon la revendication 6. Il est aussi proposé un exemple d'émission d'un signal radio en diversité de polarisation, dans lequel on transmet plusieurs versions du signal radio ayant des polarisations différentes depuis une première station vers une seconde station. Selon l'invention, on règle de manière adaptative les puissances d'émission respectives desdites versions du signal radio en fonction de mesures effectuées par la première station sur des signaux transmis par la seconde station.

Le procédé selon l'invention repose sur l'observation qu'en général, indépendamment du phénomène de fading rapide, une polarisation est privilégiée par rapport à l'autre à un instant donné en termes de puissance du signal utile mesurée au récepteur. Il est dès lors judicieux de privilégier l'émission sur l'une des deux polarisations.

Cependant, la polarisation privilégiée évolue au cours du temps, par exemple à cause de la mobilité de l'une ou l'autre des deux stations ou à cause de la présence de réflecteurs, d'obstacles ou d'interféreurs mobiles. Dans le cas où l'une des stations est un terminal mobile de radiocommunication cellulaire, la puissance reçue est en moyenne identique sur les deux polarisations, alors qu'à une échelle de temps sur laquelle les déplacements du terminal ne sont pas trop importants (par exemple de quelques centaines de millisecondes à quelques secondes), l'une des polarisations peut se trouver privilégiée. Avec les vitesses de déplacement usuelles, cette échelle de temps est grande par rapport à celle des variations du phénomène de fading sur le canal de propagation.

Le réglage adaptatif des puissances d'émission appliqué dans le procédé selon l'invention permet avantageusement de suivre ces évolutions pour procurer des performances de réception améliorées.

L'invention tire ainsi avantageusement parti de l'absence de contrainte de rapidité pesant sur la fréquence de la boucle de rétroaction de certains schémas en boucle fermée. Elle permet en outre de fournir une amélioration peu coûteuse en termes de complexité au schéma de diversité en boucle ouverte STTD.

Un autre exemple se rapporte à une station de radiocommunication à diversité de polarisation, comprenant des moyens d'émission de plusieurs versions d'un signal radio ayant des polarisations différentes vers une station de radiocommunication distante. Cette station selon l'invention comprend en outre des moyens de mesure de paramètres à partir de signaux transmis par ladite station distante et des moyens de réglage adaptatif des puissances d'émission respectives desdites versions du signal radio en fonction desdits paramètres mesurés.

L'invention propose d'autre part un terminal selon la revendication 1. Il est également proposé un exemple de terminal de radiocommunication, comprenant des moyens pour communiquer avec une infrastructure de réseau incorporant une station de radiocommunication telle que définie ci-dessus, des moyens pour recevoir et traiter des signaux émis en diversité de polarisation selon n_pol polarisations par ladite station, des moyens pour mesurer, pour certains au moins des signaux émis par ladite station de radiocommunication selon une polarisation déterminée parmi n_pol, une contribution moyenne en puissance du bruit interférant le signal utile relatif audit signal émis, et des moyens pour transmettre lesdites mesures de contribution moyenne en puissance du bruit à l'infrastructure de réseau de radiocommunication.

D'autres particularités et avantages de la présente invention apparaîtront dans la description ci-après d'exemples de réalisation non limitatifs, en référence aux dessins annexés, dans lesquels :

la figure 1 est un schéma d'une station de radiocommunication et d'un terminal mobile illustrant un premier mode de réalisation de l'invention ;
la figure 2 est un schéma synoptique d'une station de radiocommunication selon l'invention ;
la figure 3 est un schéma synoptique d'un exemple de réalisation d'un émetteur-récepteur d'une station de radiocommunication selon l'invention ;

la figure 4 est un schéma d'un réseau UMTS ;
la figure 5 est un schéma d'une station de radiocommunication et d'un terminal mobile illustrant un second mode de réalisation de l'invention.

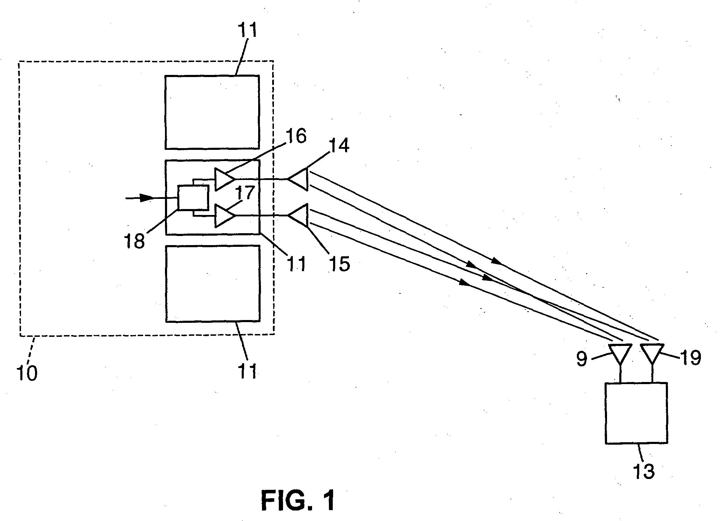

La figure 1 montre une station (10) d'un réseau de radiocommunication selon l'invention. La station (10) communique avec un contrôleur de réseau radio (non représenté sur la figure), et dessert une ou plusieurs cellules au moyen d'émetteurs-récepteurs respectifs (11). Une station (typiquement un terminal) mobile (13) est située sous la couverture d'un émetteur-récepteur (11). L'émetteur-récepteur (11) génère en émission des champs rayonnants avec n_pol (égal à 2 dans l'exemple de la figure 1) polarisations, à partir de n_pol antennes co-localisées. Dans l'exemple de la figure 1, il émet un signal radio à polarisation verticale sur une première antenne (14) et un signal radio à polarisation horizontale sur une seconde antenne (15). Conformément à la technique traditionnelle de diversité de polarisation, ces signaux radio à polarisations verticale et horizontale sont en fait deux versions d'un même signal. Chaque antenne (14)(15) est couplée à un amplificateur (16)(17), dont l'entrée est alimentée par l'une des deux sorties d'un coupleur de distribution (18). Selon un mode particulier de réalisation de l'invention, l'émission des deux versions de signal radio est simultanée, auquel cas les deux versions sont fournies à l'entrée du coupleur (18).

La station (13) est aussi munie de n_ant (égal à 2 dans l'exemple de la figure 1) antennes (9)(19), chacune sensibles en réception aux n_pol polarisations d'émission de la station (10) afin de fonctionner en mode de diversité de polarisation. De tels systèmes d'antenne peuvent par exemple être composés d'éléments dipôles croisés orientés selon un angle de $2\alpha$ entre eux pour permettre la réception de polarisations linéaires espacées angulairement de $2\alpha$. Dans l'exemple de la figure 1, la station (13) émet aussi des signaux selon deux polarisations espacées de $2\alpha$ (avec typiquement $2\alpha = 90°$).

On considère donc le cas d'une diversité d'émission d'ordre n_div = n_ant x n_pol (égal à 4 dans l'exemple de la figure 1), et la réception par une station (13) de radiocommunication d'une séquence de symboles (seq), émise à partir de l'émetteur-récepteur (11) fonctionnant en mode de diversité de polarisation. Chaque antenne (14)(15) rayonne donc un champ dans une polarisation (pol_i)$_{1 \le i \le n\_pol}$ qui transporte la séquence émise (seq$^{pol\_i}$)$_{1 \le i \le n\_pol}$. On cherche alors à déterminer un vecteur dont les composantes sont les puissances $(p_{e,BS}^{pol\_i})_{1 \le i \le n\_pol}$ de chaque séquence (seq$^{pol\_i}$)$_{1 \le i \le n\_pol}$ transmise avec une polarisation donnée (pol_i)$_{1 \le i \le n\_pol}$, et ce afin de répartir de manière optimale la puissance entre les différentes polarisations d'émission à partir de l'émetteur-récepteur (11). La somme des puissances $(p_{e,BS}^{pol\_i})_{1 \le i \le n\_pol}$ est majorée par la puissance totale P disponible en émission. Le vecteur optimal de répartition des puissances est estimé en minimisant une fonction de coût relative à la qualité du signal utile reçu par la station de réception (13), qui peut être la probabilité d'erreur binaire moyenne sur les bits.

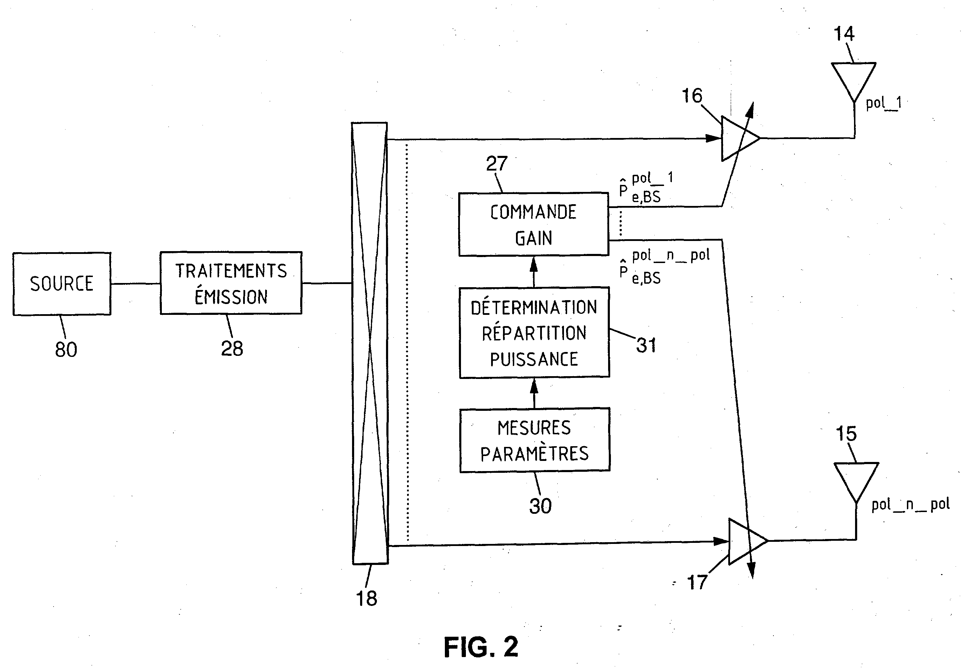

La figure 2 montre l'unité d'émission d'un émetteur-récepteur (11) d'une station (10) de radiocommunication selon l'invention. Chacune des n_pol antennes (14)(15) est agencée pour rayonner un champ avec une des n_pol polarisations d'émission de la station, et est couplée avec un amplificateur (16)(17), dont l'entrée est alimentée par l'une des sorties du coupleur (18). Les données à émettre, issues d'une source (80), sont traitées en vue de l'émission par le module (28) qui effectue les traitements de modulation, et dont la sortie est reliée au coupleur (18) pour être distribuée sur les n_pol polarisations en émission. Les puissances d'émission délivrées par les amplificateurs de puissance (16)(17) sont chacune contrôlées par le module de commande (27) de manière à répartir la puissance d'émission sur les n_pol branches d'émission selon la répartition optimale estimée par le module (31). Dans la suite, on s'attachera à des exemples de réalisation de l'invention dans lesquels on mesure des paramètres d'émission et de réception de signaux en vue de déterminer la répartition optimale des puissances. Ces mesures sont fournies par le module (30) dans l'exemple de la figure 2.

Revenant à la figure 1, la portion de signal utile reçu par la station de réception (13) sur chaque antenne (9)(19) ant_j est constituée des contributions de chaque séquence transmise (seq$^{pol\_i}$)$_{1 \le i \le n\_pol}$, notée (seq$^{pol\_i,ant\_j}$)$_{1 \le i \le n\_pol, 1 \le j \le n\_ant}$. Chaque antenne (9)(19) est couplée à un récepteur en diversité qui effectue des traitements radio (amplification, transposition en fréquence, filtrage et numérisation) et de démodulation pour fournir des estimations des séquences transmises, qui sont combinées pour fournir un gain de diversité. La combinaison peut notamment être une combinaison optimale de type MRC, qui pondère les différentes estimations en fonction des amplitudes complexes observées pour les différents trajets. Les séquences issues de chaque récepteur peuvent à leur tour être combinées selon la méthode MRC.

L'invention sera décrite dans la suite dans le cas de liaisons entre les stations (10) et (13) utilisant une modulation différentielle par déplacement de phase (DPSK, « Differential Phase Shift Keying »). La probabilité d'erreur moyenne sur les bits après combinaison MRC s'écrit :

$$BER_{MRC} = \frac{1}{2} \cdot \prod_{k=1}^{n\_div} \left( \frac{1}{1+\gamma_k} \right) \qquad (1)$$

où $(\gamma_k)_{1 \le k \le n\_div}$ désigne le rapport signal à bruit moyen mesuré sur les portions de signal utile reçues sur une antenne $(ant\_j)_{1 \le j \le n\_ant}$ selon la polarisation $(pol\_i)_{1 \le i \le n\_pol}$ en présence d'évanouissements rapides possédant une densité de probabilité de Rayleigh.

L'invention vise à déterminer une distribution des puissances d'émission selon chaque polarisation au niveau de la station (10). Pour une diversité duale de polarisation, les puissances reçues par la station (13) sur chaque antenne peuvent être exprimées au moyen de l'équation matricielle suivante :

$$\begin{pmatrix} p_{r,MS}^{ant\_1} \\ p_{r,MS}^{ant\_2} \end{pmatrix} = \begin{pmatrix} b_1 & b_2 \\ b_3 & b_4 \end{pmatrix} \begin{pmatrix} p_{e,BS}^{pol\_1} \\ p_{e,BS}^{pol\_2} \end{pmatrix} \qquad (2)$$

Les coefficients $(b_k)_{1 \le k \le n\_div}$ n_div sont des coefficients de transfert de puissance représentant une moyenne sur un intervalle de temps suffisamment long pour lisser les variations du canal dues au fading de Rayleigh, mais suffisamment court pour conserver une certaine différenciation des polarisations compte tenu de la mobilité de la station (13) par rapport aux antennes (14) et (15) de l'émetteur-récepteur (11). Cet intervalle de temps sera typiquement de l'ordre de 10 ms à quelques secondes. Les quantités $\left( p_r^{ant\_j} \right)_{1 \le j \le n\_ant}$ $\left( p_e^{pol\_i} \right)_{1 \le i \le n\_pol}$ représentent donc des contributions moyennes en puissance sur chaque polarisation pol_i en émission, ou antenne en réception ant_j, respectivement, mesurées sur un intervalle de temps de l'ordre de 10 ms à quelques secondes. Dans le sens inverse, si l'on suppose que chacune des antennes (14)(15) est aussi sensible en réception aux n_pol polarisations, les puissances reçues par la station de base (11) sur chaque polarisation peuvent être exprimées au moyen de l'équation matricielle suivante :

$$\begin{pmatrix} p_{r,BS}^{ant\_1} \\ p_{r,BS}^{ant\_2} \end{pmatrix} = \begin{pmatrix} b'_1 & b'_2 \\ b'_3 & b'_4 \end{pmatrix} \begin{pmatrix} p_{e,MS}^{pol\_1} \\ p_{e,MS}^{pol\_2} \end{pmatrix} \qquad (3)$$

En travaillant avec des quantités moyennes mesurées sur un tel intervalle de temps, le théorème de réciprocité permet de considérer que les matrices de transfert de puissance dans le sens descendant et dans le sens montant sont quasi-identiques, de sorte que l'on peut faire l'approximation : $b'_k = b_k$, $\forall 1 \le k \le n\_div$. Cet intervalle de moyennage permet en effet d'ignorer pour le besoin des calculs les phénomènes d'évanouissement rapides, les coefficients de la matrice de transfert de puissance reflétant les variations lentes de l'atténuation observées sur le canal de propagation.

Dans le cas présent de réalisation de l'invention, les quantités $(\gamma_k)_{1 \le k \le n\_div}$ s'écrivent $\gamma_k = \dfrac{puis_r^{(pol\_i, ant\_j)}}{N_r^{(pol\_i, ant\_j)}}$ pour $1 \le i \le n\_pol$, $1 \le j \le n\_ant$ où $puis_r^{(pol\_i, ant\_j)}$ désigne la contribution en puissance moyenne reçue sur l'antenne ant_j du signal utile émis avec la polarisation pol_i, et $N_r^{pol\_i, ant\_j}$ désigne la contribution en puissance moyenne reçue sur l'antenne ant_j du bruit correspondant. La matrice de transfert de puissance permet ensuite d'écrire $\gamma_k = \dfrac{b_k \cdot p_e^{pol\_i}}{N_r^{pol\_i, ant\_j}}$. La minimisation de la fonction de coût $BER_{MRC}$ (1) conduit alors à la recherche des racines positives d'un polynôme en $p_e^{pol\_1}$ de degré 3, qui permet d'obtenir l'expression des puissances optimales pour chaque polarisation émise, par exemple dans le sens descendant. Ces valeurs optimales de puissances sont transmises au module (27) de commande, afin d'être prises en compte dans la commande des moyens (16)(17) d'amplification de l'émetteur-récepteur (11).

La complexité de la détermination du vecteur optimal de distribution des puissances peut être avantageusement amoindrie en tirant parti du caractère associatif des opérations de combinaison optimale MRC. La minimisation de la fonction de coût en sortie des modules de combinaison optimale conduit à travailler sur un ordre de diversité n_div/n_pol.

Dans ce cas de figure, les quantités $(\gamma_k)_{1 \leq k \leq n\_div}$ deviennent $(\gamma_{ant\_j})_{1 \leq j \leq n\_ant}$ et s'écrivent $\gamma_{ant\_j} = \dfrac{puis_r^{ant\_j}}{N_r^{ant\_j}}$ pour $1 \leq i \leq$ n_ant où $puis_r^{ant-j}$ désigne la contribution en puissance moyenne reçue du signal utile sur l'antenne ant_j, et $N_r^{ant-j}$ désigne la contribution en puissance moyenne reçue du bruit correspondant.

L'équation matricielle (2) conduit à :

$$\gamma_{ant\_1} = \frac{p_e^{pol\_1} \times b_1 + \left(P - p_e^{pol\_1}\right) \times b_2}{N_r^{ant\_1}} \tag{4}$$

et

$$\gamma_{ant\_2} = \frac{p_e^{pol\_2} \times b_3 + \left(P - p_e^{pol\_2}\right) \times b_4}{N_r^{ant\_2}} \tag{5}$$

Il en découle, par dérivation de la fonction de coût BER$_{MRC}$ (1), l'expression des puissances optimales pour chaque polarisation émise, par exemple dans le sens descendant :

$$\hat{p}_{e,BS}^{pol\_1} = \frac{\left(N_{r,MS}^{ant\_1} + b_2 \cdot P\right) \times \left(b_4 - b_3\right) + \left(N_{r,MS}^{ant\_2} + b_4 \cdot P\right) \times \left(b_2 - b_1\right)}{2 \cdot \left(b_1 - b_2\right) \cdot \left(b_3 - b_4\right)} \tag{6}$$

et

$$\hat{p}_{e,BS}^{pol\_2} = P - \hat{p}_{e,BS}^{pol\_1} \tag{7}$$

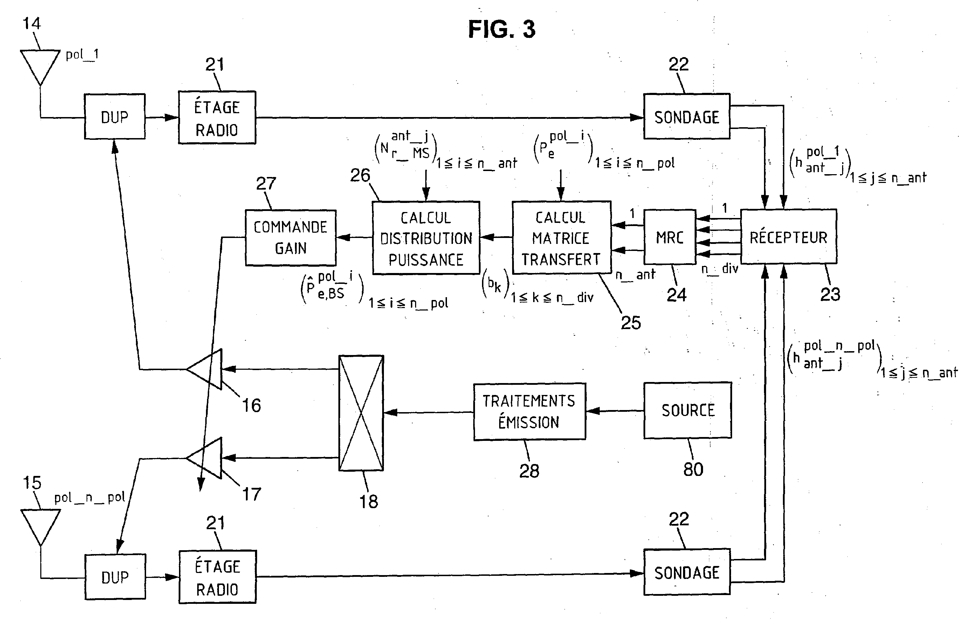

Ce mode de réalisation de l'invention est décrit ci-après dans un exemple d'application à un réseau de radio-communication utilisant la technique d'accès partagé CDMA ("Code Division Multiple Access"). La figure 3 illustre la partie réception d'un émetteur-récepteur (11) d'une station (10) de radiocommunication opérant en mode de diversité de polarisation selon l'invention. La station dispose de n_pol = 2 antennes de réception, chacune des antennes (14)(15) étant sensible à chaque polarisation $(pol\_i)_{1 \leq n-p_{ol}}$. Un étage radio (21), disposé en aval de chaque antenne (14)(15), assure les traitements d'amplification, de transposition en fréquence, de filtrage et de numérisation pour former un signal en bande de base à partir du signal radio capté par l'antenne (14)(15).

Dans un système CDMA à étalement de spectre, les séquences de symboles transmis (seq), généralement binaires ($\pm$ 1) ou quaternaires ($\pm$ 1 $\pm$ j), sont multipliées par des codes d'étalement composés d'échantillons, appelés "chips", dont la cadence est supérieure à celle des symboles, dans un rapport appelé facteur d'étalement, noté SF ("Spreading Factor"). Des codes d'étalement orthogonaux ou quasi-orthogonaux sont alloués à différents canaux partageant la même fréquence porteuse, afin de permettre à chaque récepteur de détecter la séquence de symboles qui lui est destinée, en multipliant le signal reçu par le code d'étalement correspondant.

Chaque antenne (14)(15) est couplée en réception à un récepteur traditionnel qui effectue une démodulation cohérente fondée sur une approximation de la réponse impulsionnelle du canal de propagation radio. Pour estimer une réponse impuisionnelle, un module de sondage (22) comporte, de façon classique, un filtre adapté au code d'étalement du canal ou à la séquence de symboles pilotes transmise considérée. Pendant la réception d'un symbole pilote, connu a priori de la station de base (11), la sortie de ce filtre adapté est multipliée par le complexe conjugué de ce symbole pilote, ce qui produit une observation de la réponse impulsionnelle. L'estimation est obtenue en moyennant ces observations sur quelques dizaines de symboles pilotes.

La station (10) reçoit des séquences pilotes $\left(\text{seq\_pil}_{\text{ant\_j}}^{\text{pol\_i}}\right)_{1\leq i\leq n\_pol, 1\leq j\leq n\_ant}$ correspondant à des séquences émises $\left(\text{seq\_pil}_{\text{ant\_j}}\right)_{1\leq j\leq n\_ant}$ par la station (13), constituées de séquences de symboles pilotes $(\text{seq\_pil\_symb}_{\text{ant\_j}})_{1\leq j\leq n\_ant}$ multipliées par le code d'étalement du canal. Ceci permet à chaque module (22) d'estimer séparément chaque vecteur de réponse impulsionnelle $(h_k)_{0\leq k\leq n\_div}$ dont les composantes caractérisent le canal de propagation d'un signal émis sur une parmi les n_ant d'émission de la station (13). Ce traitement est effectué pour chacune des n_pol branches du récepteur en diversité de la station (10), de sorte que dans l'exemple de réalisation de l'invention, les n_pol modules (22) réalisent n_div estimations de réponse impulsionnelle $(h_{\text{ant\_j}}^{\text{pol\_i}})_{1\leq i\leq n\_pol, 1\leq j\leq n\_ant}$. A partir de ces n_div réponses impulsionnelles estimées, un module (23) effectue une démodulation cohérente et un décodage des n_pol signaux reçus sur chaque antenne. La démodulation par exemple être effectuée au moyen d'un récepteur de type RAKE. Les estimations des symboles transmis ainsi obtenues sont ensuite combinées au sein du module (24) pour obtenir un gain en diversité. Le module (24) produit n_pol séquences de symboles estimés, chacune correspondant à la combinaison des signaux reçus selon l'une parmi les n_pol polarisations d'émission de la station (10).

Le module (25) détermine des coefficients de transfert de puissance $(b_k)_{1\leq k\leq n\_div}$, à partir de l'estimation de canal ou des signaux démodulés (estimation des bits) dont il mesure la contribution moyenne en puissance $\left(p_r^{\text{pol\_i}}\right)_{1\leq i\leq n\_pol}$, et des contributions moyennes en puissance de la station (13) $\left(p_e^{\text{pol\_i}}\right)_{1\leq i\leq n\_pol}$. Le module (26) détermine ensuite un vecteur optimal de puissances $(\hat{p}_{e,BS}^{\text{pol\_i}})_{1\leq i\leq n\_pol}$ dont il transmet les composantes correspondant à chaque polarisation au module de commande (27) qui commande en émission les amplificateurs de puissance (16)(17).

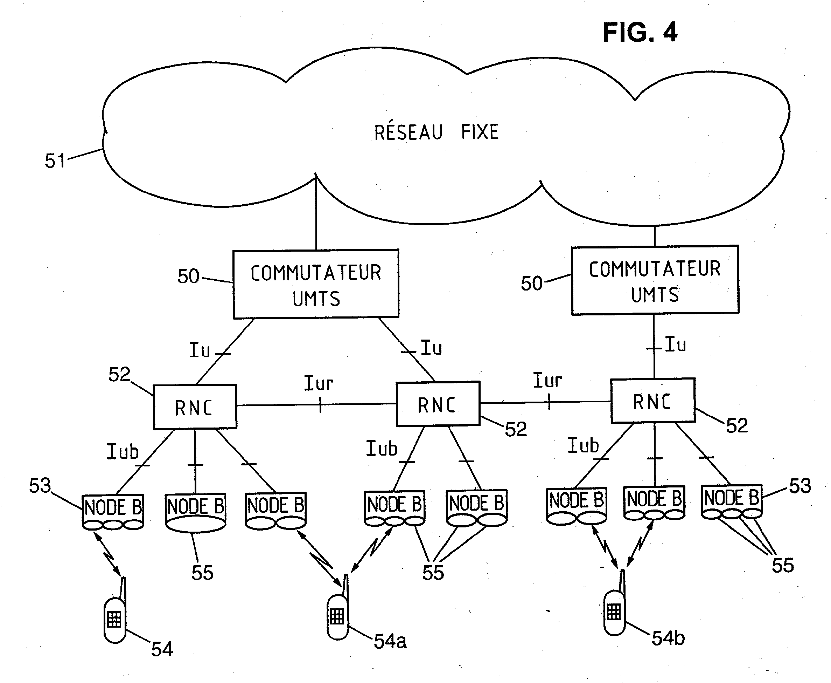

Ces traitements supposent que la station (11) dispose des contributions moyennes en puissance de la station (13) $\left(p_e^{\text{pol\_i}}\right)_{1\leq i\leq n\_pol}$ et des contributions moyennes en puissance du bruit en réception de la station (13) $(N_{r,MS}^{\text{pol\_i}})_{1\leq i\leq n\_pol}$. Ces données peuvent être fournies à la station (11) au moyen d'une boucle de rétroaction dont un exemple est fourni ci-après dans le cadre des réseaux de troisième génération de type UMTS, dont la figure 4 montre l'architecture.

Les commutateurs du service mobile 50, appartenant à un coeur de réseau (CN, « Core Network »), sont reliés d'une part à un ou plusieurs réseaux fixes 51 et d'autre part, au moyen d'une interface dite *Iu,* à des équipements de contrôle 52, ou RNC (« Radio Network Controller »). Chaque RNC 52 est relié à une ou plusieurs stations de base 53 au moyen d'une interface dite *Iub*. Les stations de base 53, réparties sur le territoire de couverture du réseau, sont capables de communiquer par radio avec les terminaux mobiles 54, 54a, 54b appelés UE (« User Equipment »). Les stations de base 53, aussi appelées « node B », peuvent desservir chacune une ou plusieurs cellules au moyen d'émetteurs-récepteurs respectifs 55. Certains RNC 52 peuvent en outre communiquer entre eux au moyen d'une interface dite *Iur*. Les RNC et les stations de base forment un réseau d'accès appelé UTRAN (« UMTS Terrestrial Radio Access Network »).

Les réseaux UMTS utilisent une technique à large bande d'accès multiple avec répartition par codes (W-CDMA, « Wideband CDMA»). La cadence chip est de 3,84 Mchip/s dans le cas de l'UMTS. Les codes d'étalement distinguent différents canaux physiques qui sont superposés sur la même ressource de transmission constituée par une fréquence porteuse. Pour l'UMTS en mode FDD (« Frequency Division Duplex ») sur la liaison descendante, un code de brouillage (« scrambling code ») est alloué à chaque émetteur-récepteur correspondant à une cellule desservie par une station de base, et différents canaux physiques dans cette cellule sont distingués par des codes de canal (« channelization codes ») mutuellement orthogonaux. L'émetteur-récepteur peut aussi utiliser plusieurs codes de brouillage mutuellement orthogonaux, l'un d'entre eux étant un code de brouillage primaire. Sur la liaison montante, l'émetteur-récepteur utilise le code de brouillage pour séparer les terminaux mobiles émetteurs, et éventuellement le code de canal pour séparer les canaux physiques issus d'un même terminal. Pour chaque canal physique, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le canal.

Dans un mode préféré de réalisation de l'invention, les signaux émis par le terminal sur chacune des polarisations le sont avec la même puissance. La puissance d'émission d'un terminal mobile peut être connue de la station de base par l'intermédiaire des procédures de mesures demandées par le RNC aux UE, pour être ensuite transmise aux stations de base sur l'interface Iub.

Les procédures de mesure sont notamment décrites dans la section 8.4 de la spécification technique 3G TS 25.331, "Radio Ressource Control (RRC) Protocol Spécification", version 3.9.0 publiée en décembre 2001 par le 3GPP, et dans la spécification technique 3G TS 25.215, "Physical Layer; Measurements (FDD)", version 3.9.0 publiée en décembre 2001 par le 3GPP. Les mesures souhaitées par le RNC sont demandées aux UE dans des messages « MEASUREMENT CONTROL », dans lesquels sont également indiqués les modes de compte rendu, par exemple avec une périodicité spécifiée ou en réponse à certains événements. Les mesures spécifiées par le RNC sont alors effectuées par l'UE qui les remonte sur la connexion RRC dans des messages « MEASUREMENT REPORT» (voir sections 10.2.15 et 10.2.17 de la spécification technique 3G TS 25.331). Ces messages « MEASUREMENT CONTROL » et « MEASUREMENT REPORT » sont relayés de façon transparente par les émetteurs-récepteurs 55 des stations de base. Les mesures prises en considération par le RNC pour contrôler les liens radio comprennent des mesures de puissance (type de mesure "UE transmitted power" décrite au paragraphe 5.1.7 de la spécification technique 25.215, version 3.9.0) effectuées sur les signaux ou canaux pilotes, obtenues par un module de mesure situé dans l'UE. Les mesures obtenues par ce module de mesure sont transmises au RNC par l'intermédiaire d'un protocole de contrôle des ressources radio (RRC), appartenant à la couche 3 du modèle ISO, décrit dans la spécification technique 3G TS 25.331. Ces mesures de puissance peuvent ensuite être retransmises à la station de base, par exemple au moyen du protocole applicatif de commande des émetteurs-récepteurs, appelé NBAP ("Node B Application Protocol", voir spécification technique 3G TS 25.433, version 3.9.0 publiée en mars 2002 par le 3GPP).

Dans la suite, on considère que les contributions moyennes en puissance du bruit en réception de la station (13) $\left( N_{r,MS}^{pol\_i} \right)_{1 \leq i \leq n\_pol}$ sont identiques sur les différentes polarisations, et notées $N_{r,MS}$. Cette contribution peut être exprimée comme suit :

$$N_{r,MS} = RSSI_{MS} - \frac{P_{e,BS}}{\text{"pathloss"}}$$

où la quantité RSSI (« Received Signal Strength Indicator ») désigne la puissance reçue dans la bande passante des signaux autour d'une porteuse UMTS. Cette puissance peut être mesurée par le récepteur radio de la station (13). Dans un système UMTS, l'UE peut aussi calculer l'atténuation du signal ("pathloss") sur le canal de propagation depuis chaque node B d'un ensemble surveillé pour la mise en oeuvre du mode de macrodiversité. La norme prévoit que le RNC puisse demander à l'UE qu'il lui rende compte de ce paramètre d'atténuation (3G TS 25.331, sections 10.3.7.38 et 14.1.1) et de cette puissance reçue (3G TS 25.331, sections 10.3.7.15 et 10.3.7.21). De même que précédemment, ces mesures peuvent ensuite être retransmises à la station de base, par exemple au moyen du protocole NBAP (voir spécification technique 3G TS 25.433 précitée).

L'orthogonalité des séquences pilotes $(seq\_pil_{ant\_j})_{1 \leq j \leq n\_ant}$ peut être assurée selon deux modes de fonctionnement détaillés ci-après.

Le premier mode de fonctionnement est caractérisé par la détermination du ou des canaux physiques à utiliser pour la communication entre la station (13) et l'émetteur-récepteur (11), ainsi que de leur format, un canal de communication ayant des caractéristiques propres selon son format. Les différents formats existants sont rassemblés dans le tableau 11 de la section 5.3.2 de la spécification technique 3G TS 25.211, "Physical channels and mapping of transport channels onto physical channels (FDD)", version 3.9.0 publiée en décembre 2001 par le 3GPP. Une des caractéristiques importantes d'un canal de communication est son facteur d'étalement SF. Plus le SF d'un canal est élevé, plus le débit qu'il offre sera faible. Mais parallèlement, plus le SF d'un canal est élevé, plus la durée d'un symbole est grande, permettant ainsi une meilleure robustesse aux interférences. Dans le système UMTS illustré à la figure 4, le RNC 52 peut décider de modifier les canaux de communication courants pour les remplacer par un ou plusieurs canaux de communication de SF différent. Un traitement similaire peut d'ailleurs être effectué, non pas en cours de communication, mais à l'initialisation de celle-ci, lors de l'allocation de ressources radio.

Pour illustrer ce principe général, considérons un canal de communication de SF 8 utilisé à un moment donné entre un terminal mobile 54 et un émetteur récepteur fixe 55. Celui-ci est par exemple un canal de format n° 15 selon la codification de la spécification technique 3G TS 25.211. Le RNC peut choisir d'utiliser, en remplacement de ce canal de communication, deux autres canaux de SF 16, par exemple de format n° 14. Le terminal mobile 54 fonctionne alors en mode de transmission multicode. La communication est alors également répartie entre les deux canaux. Le débit résultant est légèrement plus faible avec les deux canaux de SF 16, ce qui n'empêchera toutefois pas d'offrir le service requis.

Lorsque le mobile transmet en multicode des signaux à diversité de polarisation, l'allocation en transmission de chaque canal de communication peut être effectuée de manière à transmettre avec un code de canal donné sur une polarisation. Dans l'exemple précédent, chaque canal de SF16 peut être transmis sur une antenne du terminal mobile, chaque antenne générant des signaux radio électriques de polarisation $(pol\_i)_{1 \leq i \leq n\_pol}$. Cela permet d'associer un code de canal avec une polarisation, ce qui assure l'orthogonalité des séquences $(seq\_pil_{ant\_j})_{1 \leq j \leq n\_ant}$ émises sur chaque antenne.

Dans le système UMTS, le fonctionnement en mode multicode d'un mobile est contrôlé par le RNC correspondant. La transmission par le RNC des canaux à utiliser par le terminal mobile se fait selon le protocole RRC, tel que présenté dans la spécification technique 3G TS 25.331 précitée, grâce à un message de commande d'initialisation ou de reconfiguration de canaux : "Radio bearer setup", "Radio bearer reconfiguration" ou "Physical channel reconfiguration". Chacun de ces messages contient un élément d'information nommé "Downlink information for each radio link" (voir paragraphe 10.3.6.27 de la 3G TS 25.331). Ce message contient lui-même un élément d'information nommé "Downlink DPCH info for each RL" (voir paragraphe 10.3.6.21 de la 3G TS 25.331). Ce dernier message contient un certain nombre d'informations permettant de caractériser les canaux à utiliser. Parmi ces informations, on trouve les codes de canal descendant, les facteurs d'étalement et les codes de brouillage associés. A la réception de ce message, le terminal mobile est capable d'utiliser le ou les canaux identifiés et transmis par le RNC.

Dans un autre mode de fonctionnement, l'orthogonalité des séquences pilotes émises $(seq\_pil_{ant\_j})_{1 \leq j \leq n\_ant}$ est assurée par l'orthogonalité des séquences de symboles pilotes considérées $(seq\_pil\_symb_{ant\_j})_{1 \leq j \leq n\_ant}$.

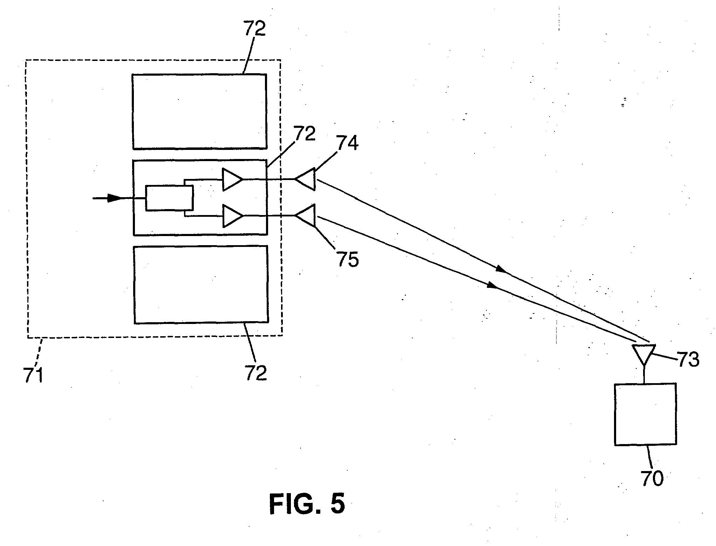

Dans un second mode de réalisation illustré par la figure 5, la station mobile (70) est équipée de n_ant = 1 antenne dipolaire (73). Compte tenu des rotations de polarité intervenant le long des trajets de propagation entre l'émetteur et le récepteur, cette antenne (73) est sensible en réception à chacune des n_pol polarisations d'émission de la station fixe (71). L'ordre de diversité est alors égal à n_pol (égal à 2 dans l'exemple de la figure 5).

Dans le cas de liaisons entre les stations (70) et (71) utilisant une modulation DPSK, la probabilité d'erreur moyenne sur les bits après combinaison MRC s'écrit :

$$BER_{MRC} = \frac{1}{2} \cdot \prod_{i=1}^{n\_pol} \left( \frac{1}{1 + \gamma_i} \right) \qquad (8)$$

où $(\gamma_i)_{1 \leq i \leq n\_pol}$ désigne le rapport signal à bruit moyen mesuré sur les portions de signal utile reçues par la station (70) selon la polarisation $(pol\_i)_{1 \leq i \leq n\_pol}$ en présence d'évanouissements rapides possédant une densité de probabilité de Rayleigh.

On cherche à minimiser $BER_{MRC}$ (8) sous la contrainte :

$$\sum_{i=1}^{n\_pol} p_{e,BS}^{pol\_i} = P \qquad (9)$$

Les quantités $(\gamma_i)_{1 \leq i \leq n\_pol}$ s'écrivent : $\gamma_i = \dfrac{puis_r^{pol\_i}}{N_r^{pol\_i}}$ pour $1 \leq i \leq n\_pol$ où $puis_r^{pol\_i}$ désigne la contribution en puissance moyenne reçue par la station (70) du signal utile émis avec la polarisation pol_i, et $N_r^{pol\_i}$ désigne la contribution en puissance moyenne reçue du bruit. En notant, $(b_i)_{1 \leq i \leq n\_pol}$ le coefficient d'atténuation subi par le signal utile émis avec la polarisation pol_i, il vient : $\gamma_i = \dfrac{b_i \cdot p_e^{pol\_i}}{N_r^{pol\_i}}$. Des techniques classiques d'optimisation sous contrainte (comme par exemple les coefficients multiplicateurs de Lagrange) conduisent à l'optimum :

$$\hat{p}_{e,BS}^{pol\_i} = \frac{P}{n\_pol} + \frac{1}{n\_pol} \sum_{l=1}^{n\_pol} \frac{N_r^{pol\_l}}{b_l} - \frac{N_r^{pol\_i}}{b_i} \qquad (10)$$

En supposant que la contribution en puissance moyenne reçue du bruit est identique sur chaque polarisation, et est notée Nr, on obtient :

$$\hat{p}_{e,BS}^{pol\_i} = \frac{P}{n\_pol} + \frac{N_r}{n\_pol} \sum_{l=1}^{n\_pol} \frac{1}{b_l} - \frac{N_r}{b_i} \qquad (11)$$

soit pour une diversité de polarisation d'ordre 2, comme illustré sur la figure 5 :

$$\hat{p}_{e,BS}^{pol\_1} = \frac{P}{2} + \frac{N_r}{2}\left(\frac{1}{b_2} - \frac{1}{b_1}\right) \qquad (12)$$

et

$$\hat{p}_{e,BS}^{pol\_2} = \frac{P}{2} + \frac{N_r}{2}\left(\frac{1}{b_1} - \frac{1}{b_2}\right) \qquad (13)$$

De même que précédemment, l'application du théorème de réciprocité permet d'obtenir les coefficients $(b_i)1_{\leq i \leq n\_pol}$ à partir d'une mesure des atténuations dans le sens montant, de la station (70) vers la station (71). Le couplage de chaque antenne (74)(75) de l'émetteur-récepteur (72) à un récepteur traditionnel permet de mettre en oeuvre l'exemple précédent de procédé d'obtention des coefficients $(b_i)_{1\leq i \leq n\_pol}$.

La puissance d'émission de la station (71) sur chaque antenne (74)(75) correspondant à une polarisation donnée est donc ajustée de manière à privilégier le meilleur trajet du signal émis. Ce procédé peut avantageusement être combiné avec d'autres schémas de diversité d'émission, prévus par exemple pour des réseaux de type GSM ("Global System for Mobile Telecommunications"), ou pour des réseaux de type UMTS, comme le schéma STTD évoqué plus haut. Dans ce cas de figure, les deux versions du signal radio sont émises selon le schéma d'émission STTD. Leur émission n'est de ce fait pas simultanée.

## Revendications

1. Terminal comprenant:

   une pluralité n d'antennes capable d'émettre des signaux avec une pluralité de n polarisations orthogonales collectivement à une infrastructure de radiocommunication;
   des moyens de traitement de signaux générant n séquences de signaux en diversité de polarisation d'émission; chaque antenne dudit terminal étant reliée à une des n séquences de signaux en diversité de polarisation d'émission ; et
   des moyens d'émission pour émettre lesdites n séquences de signaux en diversité de polarisation d'émission par la pluralité n d'antennes, lesdites n séquences de signaux en diversité de polarisation d'émission étant prévues pour être réceptionnées par au moins un récepteur (10) d'une infrastructure de radiocommunication, lesdits moyens d'émission estimant une distribution de puissance de transmission optimale entre lesdites n séquences de signaux en diversité de polarisation d'émission sur base d'une minimisation d'une fonction de coût par rapport à une qualité d'un signal reçu par ledit récepteur de l'infrastructure de radiocommunication.

2. Terminal selon la revendication 1, dans lequel une diversité en boucle ouverte est générée.

3. Terminal selon la revendication 2, dans lequel la diversité en boucle ouverte est générée selon un schéma de diversité d'émission en boucle ouverte standardisé utilisant un ou plusieurs temps ou espace ou fréquences.

4. Terminal selon la revendication 1, 2 ou 3, dans lequel le terminal et un réseau de radiocommunication opèrent selon une technologie de code d'accès multiple à répartition par code et dans lequel lesdits moyens de traitement de signaux générant n séquences de signaux en diversité de polarisation d'émission sont configurés pour générer une pluralité de n codes indépendants, chaque code étant modifié par une séquence de données dans un agencement multicode, de façon à obtenir n séquences de signaux multicodes en diversité de polarisation d'émission .

**5.** Terminal selon l'une quelconque des revendications 1 à 4, qui est conforme à au moins un de GSM ou UMTS ou une des extensions des ces standards définis par 3GPP.

**6.** Procédé pour un terminal opérant avec un réseau de radiocommunication selon une technologie de code d'accès multiple à répartition par code, le procédé comprenant:

une génération de n séquences de signaux multicodes en diversité de polarisation d'émission, obtenue à partir d'une génération d'une pluralité de n codes indépendants, chaque code étant modifié par une séquence de données dans un agencement multicode, chacune desdites n séquences de signaux multicodes en diversité de polarisation d'émission générée étant reliée à une antenne d'une pluralité n d'antennes d'un terminal; et une émission desdites n séquences de signaux multicodes en diversité de polarisation d'émission par la pluralité n d'antennes, lesdites n séquences de signaux multicodes en diversité de polarisation d'émission étant prévues pour être réceptionnées par au moins un récepteur d'une infrastructure de radiocommunication, ledit procédé comprenant en outre une estimation d'une distribution de puissance de transmission optimale entre lesdites n séquences de signaux multicodes en diversité de polarisation d'émission sur base d'une minimisation d'une fonction de coût par rapport à une qualité d'un signal reçu par ledit récepteur de l'infrastructure de radiocommunication.

**7.** Procédé selon la revendication 6, qui comprend en plus un ajustement individuel de la puissance émise pour chaque chemin d'émission en réponse à des données de rétroaction reçues du récepteur de l'infrastructure de radiocommunication.

**8.** Procédé selon l'une quelconque des revendications 6 à 7, qui est conforme à au moins un de GSM ou UMTS ou une des extensions des ces standards définis par 3GPP.

**Patentansprüche**

**1.** Endgerät, das Folgendes umfasst:

eine Mehrzahl n von Antennen, die zusammen Signale mit einer Mehrzahl n von orthogonalen Polarisationen zu einer Funkkommunikations-Infrastruktur senden können; Signalverarbeitungsmittel, die n Folgen von Signalen mit Sendepolarisationsdiversität erzeugen können; wobei jede Antenne des Endgeräts mit einer der n Folgen von Signalen mit Sendepolarisationsdiversität verbunden ist; und Sendemittel, um die n Folgen von Signalen mit Sendepolarisationsdiversität durch die Mehrzahl n von Antennen zu senden, wobei die n Folgen von Signalen mit Sendepolarisationsdiversität vorgesehen sind, um durch wenigstens einen Empfänger (10) einer Funkkommunikations-Infrastruktur empfangen zu werden, wobei die Sendemittel eine optimale Verteilung der Übertragungsleistung zwischen den n Folgen von Signalen mit Sendepolarisationsdiversität auf der Grundlage der Minimierung einer Kostenfunktion in Bezug auf eine Qualität eines von dem Empfänger der Funkkommunikations-Infrastruktur empfangenen Signals schätzen.

**2.** Endgerät nach Anspruch 1, wobei eine Diversität mit offener Schleife erzeugt wird.

**3.** Endgerät nach Anspruch 2, wobei die Diversität mit offener Schleife gemäß einem genormten Sendediversitätsschema mit offener Schleife, das eine oder mehrere Zeiten, einen oder mehrere Räume oder eine oder mehrere Frequenzen verwendet, erzeugt wird.

**4.** Endgerät nach Anspruch 1, 2 oder 3, wobei das Endgerät und ein Funkkommunikationsnetz gemäß einer Technologie des Codevielfachzugriffs mit Codeverteilung arbeiten und wobei die Signalverarbeitungsmittel, die n Folgen von Signalen mit Sendepolarisationsdiversität erzeugen, konfiguriert sind, eine Mehrzahl n von unabhängigen Codes zu erzeugen, wobei jeder Code durch eine Datenfolge in einer Mehrfachcode-Anordnung in der Weise modifiziert wird, dass n Folgen von Mehrfachcode-Signalen mit Sendepolarisationsdiversität erhalten werden.

**5.** Endgerät nach einem der Ansprüche 1 bis 4, das mit der GSM- und/oder der UMTS-Norm und/oder einer der Erweiterungen dieser Normen, die durch 3GPP definiert sind, in Übereinstimmung ist.

**6.** Verfahren für ein Endgerät, das mit einem Funkkommunikationsnetz gemäß einer Technologie des Codevielfachzugriffs mit Codeverteilung arbeitet, wobei das Verfahren Folgendes umfasst:

Erzeugen von n Folgen von Mehrfachcode-Signalen mit Sendepolarisationsdiversität, die aus der Erzeugung einer Mehrzahl n von unabhängigen Codes erhalten werden, wobei jeder Code durch eine Datenfolge in einer Mehrfachcode-Anordnung modifiziert wird, wobei jede der n erzeugten Folgen von Mehrfachcode-Signalen mit Sendepolarisationsdiversität mit einer Antenne einer Mehrzahl n von Antennen eines Endgeräts verbunden ist; und

Senden der n Folgen von Mehrfachcode-Signalen mit Sendepolarisationsdiversität durch eine Mehrzahl n von Antennen, wobei die n Folgen von Mehrfachcode-Signalen mit Sendepolarisationsdiversität vorgesehen sind, um durch wenigstens einen Empfänger mit Funk-kommunikations-Infrastruktur empfangen zu werden,

wobei das Verfahren außerdem eine Schätzung einer optimalen Verteilung der Übertragungsleistung zwischen den n Folgen von Mehrfachcode-Signalen mit Sendepolarisationsdiversität auf der Grundlage einer Minimierung einer Kostenfunktion in Bezug auf die Qualität eines von dem Empfänger der Funkkommunikations-Infrastruktur empfangenen Signals umfasst.

7. Verfahren nach Anspruch 6, das außerdem eine individuelle Einstellung der von jedem Sendeweg ausgesendeten Leistung in Reaktion auf Rückkopplungsdaten, die von dem Empfänger der Funk-kommunikations-Infrastruktur empfangen werden, umfasst.

8. Verfahren nach einem der Ansprüche 6 bis 7, das mit der GSM-und/oder der UMTS-Norm und/oder einer der Erweiterungen dieser Normen, die durch 3GPP definiert sind, in Übereinstimmung ist.

**Claims**

1. Terminal comprising

   - a plurality n of antennas capable of emitting signals with a plurality of n orthogonal polarisations collectively to a radiocommunication infrastructure;
   - means for processing signals generating n sequences of signals with transmission polarisation diversity;
   - each antenna of said terminal being connected to one of the n signal sequences with transmission polarisation diversity;
   - transmission means in order to emit said n signal sequences with transmission polarisation diversity by the plurality n of antennas, said n signal sequences with transmission polarisation diversity being provided in order to be received by at least one receiver (10) of a radiocommunication infrastructure, said transmission means estimating an optimal transmission power distribution between said n signal sequences with transmission polarisation diversity on the basis of a minimisation of a cost function with respect to a quality of a signal received by said receiver of the radiocommunication infrastructure.

2. Terminal according to claim 1, wherein an open-loop diversity is generated.

3. Terminal according to claim 2, wherein the open-loop diversity is generated according to a standard open-loop transmission diversity scheme using one or several times or space or frequencies.

4. Terminal according to claim 1, 2 or 3, wherein the terminal and a radiocommunication network operate according to a code division multiple access technology and wherein said signal processing means generating n signal sequences with transmission polarisation diversity are configured in order to generate a plurality of n independent codes, each code being modified by a sequence of data in a multicode arrangement, in such a way as to obtain n multicode signal sequences with transmission polarisation diversity.

5. Terminal according to any one of claims 1 to 4, which conforms to at least one of GSM or UMTS or one of the extensions of these standards defined by 3GPP.

6. Method for a terminal operating with a radiocommunication network according to a code division multiple access technology, said method comprising:

   - generation of n multicode signal sequences with transmission polarisation diversity, obtained on the basis of generation of a plurality of n independent codes, each code being modified by a sequence of data in a multicode arrangement, each of said n multicode signal sequences with generated transmission polarisation diversity connected to an antenna of a plurality n of antennas of a terminal; and

- transmission of said n signal sequences with transmission polarisation diversity by the plurality n of antennas, said n signal sequences with transmission polarisation diversity being provided in order to be received by at least one receiver of a radiocommunication infrastructure,

said method further comprising

- estimation of an optimal transmission power distribution between said n multicode signal sequences with transmission polarisation diversity on the basis of a minimisation of a cost function with respect to a quality of a signal received by said receiver of the radiocommunication infrastructure.

7. Method according to claim 6, which additionally comprises an individual adjustment of the power transmitted for each transmission path in response to feedback data received from the receiver of the radiocommunication infrastructure.

8. Method according to any one of claims 6 to 7, which conforms to at least one of GSM or UMTS or one of the extensions of these standards defined by 3GPP.

FIG. 1

**FIG. 2**

## FIG. 3

14  pol_1

21 ÉTAGE RADIO

DUP

22 SONDAGE

$\left(N_{r\_MS}^{ant\_j}\right)_{1 \leq i \leq n\_ant}$

$\left(P_e^{pol\_i}\right)_{1 \leq i \leq n\_pol}$

$\left(h_{ant\_j}^{pol\_1}\right)_{1 \leq j \leq n\_ant}$

27 COMMANDE GAIN

26 CALCUL DISTRIBUTION PUISSANCE

25 CALCUL MATRICE TRANSFERT

24 MRC

23 RÉCEPTEUR

$\left(\hat{P}_{e,BS}^{pol\_i}\right)_{1 \leq i \leq n\_pol}$

$\left(b_k\right)_{1 \leq k \leq n\_div}$

n_ant

n_div

16

17

18

28 TRAITEMENTS ÉMISSION

80 SOURCE

15  pol_n_pol

21 ÉTAGE RADIO

DUP

22 SONDAGE

$\left(h_{ant\_j}^{pol\_n\_pol}\right)_{1 \leq j \leq n\_ant}$

EP 2 456 085 B1

**FIG. 4**

RÉSEAU FIXE

51

COMMUTATEUR UMTS    50

COMMUTATEUR UMTS    50

Iu          Iu          Iu

52          Iur          Iur

RNC          RNC          RNC

Iub          52          52

Iub          Iub          Iub

53          NODE B  NODE B  NODE B    NODE B  NODE B    NODE B  NODE B  NODE B    53

55          55          55

54          54a          54b

EP 2 456 085 B1

17

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6411824 A
- WO 0154230 A
- US 6154659 A


**Littérature non-brevet citée dans la description**

- Physical layer procedures (FDD) - Release 1999. *3G TS 25.214,* Décembre 2001
- **LEE ; YEH.** Polarization diversity system for mobile radio. *IEEE Trans. Com.,* 1972, 912-922
- Radio Ressource Control (RRC) Protocol Spécification. *3G TS 25.331,* Décembre 2001
- Physical Layer; Measurements (FDD). *3G TS 25.215,* Décembre 2001
- Node B Application Protocol. *3G TS 25.433,* Mars 2002
- Physical channels and mapping of transport channels onto physical channels (FDD). *3G TS 25.211,* Décembre 2001